# EUROPEAN PATENT APPLICATION

(11) **EP 4 684 706 A1**
(43) Date of publication of application: **28.01.2026**
(21) Application number: 25190186.4
(22) Date of filing: 17.07.2025
(51) Int. Cl.: A47J 37/06

(54) **STEAM AIR FRYER WITH WASTE WATER COLLECTION FUNCTION**

(30) Priority: 23.07.2024 CN 202421754528 U
(71) Applicant: Ningbo Careline Electric Appliance Co., Ltd., Ningbo, Zhejiang 315000 (CN)
(72) Inventor: ZHANG, Yichi, Ningbo City 315000 (CN); PAN, Huayuan, Ningbo City 315000 (CN); HUO, Zhian, Ningbo City 315000 (CN)
(74) Representative: Meyer-Dulheuer MD Legal Patentanwälte PartG mbB

(57) **Abstract**

The application relates to a steam air fryer with waste water collection function, the waste water collection system comprises a collection port arranged below the air outlet and corresponding to the air outlet, a collection box detachably arranged on the machine body, and a diversion channel arranged in the machine body and communicating the collection port with the collection box, the projection of the air outlet on the plane where the edge of the collection port is located is within the collection port. The waste water collection system can collect and treat the condensed water generated when high-temperature steam is discharged from the air outlet, thereby reducing the probability that the condensed water flows out to the external environment and causes pollution to the external environment.

## Description

### CROSS REFERENCE TO RELATED APPLICATIONS

The present disclosure claims priorities to Chinese patent application No. 2024217545283 filed to the China Patent Office on July 23, 2024 and entitled "Steam Air Fryer with Waste Water Collection Function", the entire contents of which incorporated herein by reference.

### TECHNICAL FIELD

The present disclosure relates to the field of air fryers, in particular to a steam air fryer with waste water collection function.

### BACKGROUND

With the development of society, people's lives are getting better and better, and the oil-free cooking method of air fryers is becoming more and more popular. However, when existing air fryers perform air-frying cooking, the circulating hot air takes away a large amount of moisture from the food, resulting in dry taste of the cooked food and poor user experience. To meet user needs, a type of steam air fryers has appeared on the market. Such air fryers cook food by converting water into high-temperature steam. Although they can effectively improve the taste of food, when such air fryers are used, the discharged high-temperature steam is easy to cool down to form condensed water, which pollutes the external environment and affects user experience.

### SUMMARY

The application provides a steam air fryer with waste water collection function to solve the technical problems that the condensed water generated when existing steam air fryers discharge high-temperature steam is easy to flow out to the external environment, causing pollution to the external environment and resulting in poor user experience.

A steam air fryer with waste water collection function, comprising a machine body, a cooking cavity arranged in the machine body, a steam generation system for delivering steam into the cooking cavity, and an air outlet assembly for discharging steam in the cooking cavity, wherein the air outlet assembly comprises an air outlet channel with one end communicating with the cooking cavity, and the other end of the air outlet channel is provided with an air outlet communicating with the atmosphere, characterized in that the steam air fryer further comprises a waste water collection system, the waste water collection system comprises a collection port arranged below the air outlet and corresponding to the air outlet, a collection box detachably arranged on the machine body, and a diversion channel arranged in the machine body and communicating the collection port with the collection box, and the projection of the air outlet on the plane where the edge of the collection port is located is within the collection port. By arranging the waste water collection system in the steam air fryer, the condensed water generated when high-temperature steam is discharged from the air outlet can be collected and treated, so as to reduce the probability that the condensed water flows out to the external environment and causes pollution to the external environment; meanwhile, by arranging the collection port of the waste water collection system below the air outlet and making the projection of the air outlet on the plane where the edge of the collection port is located be within the collection port, the condensed water at the air outlet can better flow into the collection port under the action of gravity, so as to improve the collection effect of the collection port and the waste water collection system and enhance user experience.

In one or more embodiments, at least part of the outer side of the collection port is provided with a protrusion protruding from the outer shell of the machine body, and at least part of the protrusion is an arc-shaped diversion structure extending obliquely from the bottom of the collection port to the outer side of the top of the collection port. By arranging the protrusion protruding from the outer shell of the machine body on the outer side of the collection port and setting the protrusion as an arc-shaped diversion structure extending obliquely from the bottom of the collection port to the outer side of the top of the collection port, better collection of the condensed water flowing out from the air outlet can be realized, thus effectively improving the collection effect.

In one or more embodiments, a lower machine core forming at least part of the cooking cavity is arranged in the machine body, and the protrusion is suitable for being integrally formed with the lower machine core. By integrally forming the protrusion with the lower machine core, not only can the structures of the waste water collection system and the steam air fryer be simplified, thereby reducing installation difficulty and production cost, but also the structural integrity of the steam air fryer can be effectively improved.

In one or more embodiments, a heat dissipation air duct communicating with the atmosphere is arranged in the machine body, a heat dissipation component for generating heat dissipation cold air is arranged in the heat dissipation air duct, and at least part of the heat dissipation air duct is arranged around the air outlet assembly. By arranging the heat dissipation air duct at least partially surrounding the air outlet assembly in the machine body, the heat dissipation cold air in the heat dissipation air duct can be used to dissipate heat for the air outlet assembly, thereby reducing the temperature of the air discharged from the air outlet and further reducing the risk of users being scalded by high-temperature steam; meanwhile, using the heat dissipation cold air in the heat dissipation air duct to dissipate heat for the air outlet assembly can also effectively reduce the situation that the high temperature in the air outlet assembly is transferred outward, resulting in excessively high local temperature of the machine body.

In one or more embodiments, the front side of the machine body is provided with a front opening communicating with the cooking cavity, a fryer basket assembly is detachably arranged in the cooking cavity through the front opening, the fryer basket assembly comprises a fryer basket with a containing cavity, and at least part of the diversion channel is suitable for being formed between the outer wall of the fryer basket and the inner wall of the cooking cavity. By using the outer wall of the fryer basket and the inner wall of the cooking cavity to form at least part of the diversion channel, the condensed water in the cooking cavity can be introduced into the collection box, so as to avoid affecting the cooking effect or flowing out to the external environment due to accumulation, thus causing pollution to the external environment.

In one or more embodiments, the collection box is arranged below the cooking cavity, a diversion port communicating with the collection box is arranged at the bottom of the cooking cavity, and the bottom wall of the cooking cavity is suitable for being an inclined surface structure inclined from the outer edge to the direction of the diversion port. By setting the bottom wall of the cooking cavity as an inclined surface structure inclined from the outer edge to the direction of the diversion port, the condensed water in the cooking cavity can automatically gather at the diversion port under the action of gravity and then flow into the collection box, which can effectively improve the diversion effect of the diversion channel and the collection effect of the waste water collection system.

In one or more embodiments, a lower machine core forming at least part of the cooking cavity is arranged at the bottom of the cooking cavity, a water guide pipe extending downward is arranged at the bottom of the lower machine core, the upper end of the water guide pipe is communicated with the diversion port, and the lower end is communicated with the collection box. By arranging the collection box below the lower machine core and setting a water guide pipe extending downward at the bottom of the lower machine core to communicate with the collection box, the condensed water in the cooking cavity can automatically flow into the collection box under the action of gravity, effectively improving the diversion effect of the diversion channel and the collection effect of the waste water collection system.

In one or more embodiments, a water retaining part extending upward is arranged at the bottom of the front opening, and when the fryer basket assembly is arranged in the cooking cavity, the top plane of the water retaining part is suitable for being flush with the bottom plane of the fryer basket. The water retaining part is suitable for blocking the water at the bottom of the cooking cavity to prevent the water in the cooking cavity from flowing out of the cooking cavity through the front opening, thus causing pollution to the external environment; meanwhile, the water retaining part is also suitable for blocking the water at the bottom of the fryer basket to reduce the probability that the water at the bottom of the cooking cavity is carried out when the fryer basket is disassembled, thus causing pollution to the external environment.

In one or more embodiments, a mounting groove with an open top is arranged at the position corresponding to the collection port on the top of the machine body, a side opening facing the direction of the collection port is arranged at the side part of the mounting groove, a water tank is detachably arranged in the mounting groove, and the water tank is suitable for being communicated with the steam generation system. By arranging the mounting groove on the top of the machine body to install the water tank, the water tank can be hidden to improve the overall aesthetic degree of the machine body; meanwhile, by arranging a side opening facing the direction of the collection port at the side part of the mounting groove, the residual water generated when the water tank is installed and disassembled can be introduced into the collection port, so as to prevent the residual water from being carried out when the water tank is disassembled and polluting the external environment.

In one or more embodiments, the air outlet channel is suitable for being arranged obliquely, the upper end of the air outlet channel is communicated with the air outlet, the lower end is communicated with the cooking cavity, a water retaining structure is arranged in the air outlet channel, a water discharge port is arranged on one side of the water retaining structure close to the air outlet, and the water discharge port is communicated with the diversion channel. By obliquely arranging the air outlet channel and setting the water retaining structure and the water discharge port in the air outlet channel, not only can the condensed water in the air outlet channel be blocked to prevent the condensed water in the air outlet channel from flowing back into the cooking cavity and polluting the food in the cooking cavity, but also the condensed water in the air outlet channel can be discharged to avoid the condensed water accumulating in the air outlet channel and affecting the normal air outlet of the air outlet channel.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is a schematic diagram of the overall structure of an embodiment of the present disclosure.
FIG. 2 is a schematic diagram of the exploded structure of an embodiment of the present disclosure.
FIG. 3 is a schematic diagram of the overall cross-section of an embodiment of the present disclosure.

Reference numerals: 10- machine body; 11- cooking cavity; 111- diversion port; 12- lower machine core; 121- water guide pipe; 13- heat dissipation air duct; 14- heat dissipation component; 15- front opening; 16- water retaining part; 17- mounting groove; 20- steam generation system; 30- air outlet assembly; 31- air outlet channel; 32- air outlet; 33- water retaining structure; 34- water discharge port; 40- waste water collection system; 41- collection port; 42- diversion channel; 43- collection box; 44- protrusion; 50- fryer basket assembly; 51-fryer basket; 60- water tank.

### DETAILED DESCRIPTION

In The following description is used to disclose the application so that those skilled in the art can implement the application. The preferred embodiments in the following description are only examples, and those skilled in the art can think of other obvious variations. The basic principles defined in the following description can be applied to other implementations, modifications, improvements, equivalents and other technical schemes without departing from the spirit and scope of the application.

It should be noted that the terms used herein are only for describing specific implementations, not intended to limit the exemplary implementations according to the application. As used herein, unless the context clearly indicates otherwise, the singular form is also intended to include the plural form. In addition, it should be understood that when the terms "comprise" and/or "include" are used in this specification, they indicate the presence of features, steps, operations, devices, components and/or combinations thereof.

Unless otherwise specifically stated, the relative arrangement of components and steps, numerical expressions and numerical values set forth in these embodiments do not limit the scope of the application. Meanwhile, it should be understood that for the convenience of description, the sizes of various parts shown in the drawings are not drawn according to the actual proportional relationship. For the technologies, methods and devices known to those of ordinary skill in the related art, they may not be discussed in detail, but where appropriate, the technologies, methods and devices should be regarded as part of the authorized specification. In all examples shown and discussed herein, any specific value should be interpreted as merely exemplary rather than limiting. Therefore, other examples of the exemplary embodiments may have different values. It should be noted that similar reference numerals and letters indicate similar items in the following drawings, so once an item is defined in one drawing, it does not need to be discussed further in subsequent drawings.

In the description of the application, it should be understood that orientation words such as "front, rear, upper, lower, left, right", "horizontal, vertical, vertical, horizontal" and "top, bottom" usually refer to the orientation or position relationship shown in the drawings, which is only for the convenience of describing the application and simplifying the description. Unless otherwise stated, this orientation words do not indicate and imply that the device or element referred to must have a specific orientation or be constructed and operated in a specific orientation, so they cannot be understood as limiting the protection scope of the application; the orientation words "inner and outer" refer to the inner and outer relative to the outline of each component itself.

Moreover, for the convenience of description, spatial relative terms such as "above", "on the top", "on the upper surface", "upper" and the like can be used here to describe the spatial position relationship between one device or feature and other devices or features as shown in the drawings. It should be understood that the spatial relative terms are intended to include different orientations of the device in use or operation in addition to the orientation shown in the drawings. For example, if the device in the drawing is turned over, the device described as "above other devices or structures" or "on other devices or structures" will then be positioned as "below other devices or structures" or "under other devices or structures". Therefore, the exemplary term "above" can include both orientations of "above" and "below". The device can also be positioned in other different ways (rotated by 90 degrees or in other orientations), and the spatial relative description herein can be interpreted accordingly.

In addition, it should be noted that the term "one" should be understood as "at least one" or "one or more". That is, in one embodiment, the number of one element can be one, while in another embodiment, the number of the element can be one or more. The term "one" cannot be understood as a limit on the number. The use of words such as "first" and "second" to define components is only for the convenience of distinguishing corresponding components. Unless otherwise stated, the above words have no special meaning, so they cannot be understood as limiting the protection scope of the application.

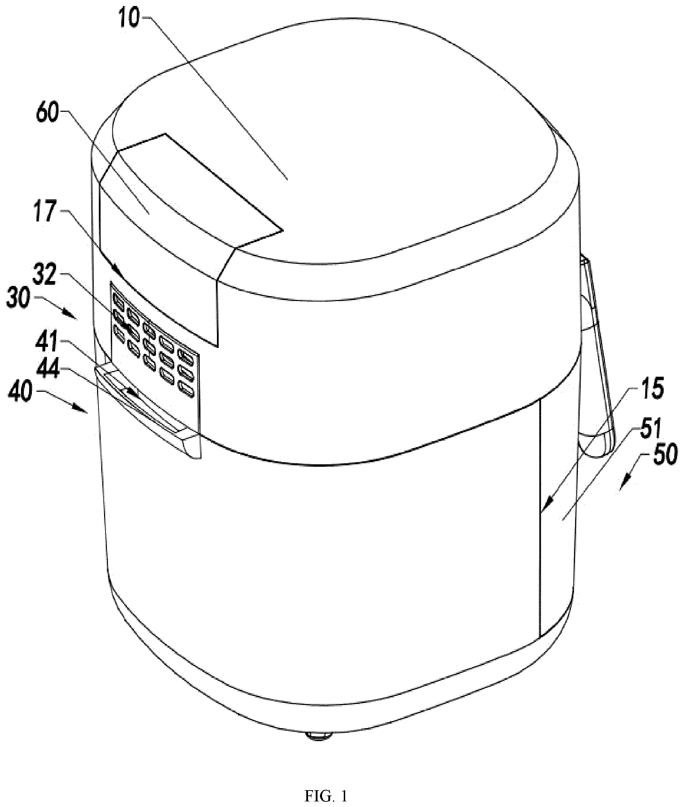

As shown in FIG. 1 to FIG. 3, which are schematic diagrams of a steam air fryer with waste water collection function provided by the application, the steam air fryer comprises a machine body 10, a cooking cavity 11 arranged in the machine body 10, and a steam generation system 20 communicated with the cooking cavity 11. The steam generation system 20 is suitable for generating high-temperature steam and introducing it into the cooking cavity 11 to cook the food in the cooking cavity 11.

As shown in FIG. 1 to FIG. 3, the steam air fryer further comprises an air outlet assembly 30 for discharging steam in the cooking cavity 11 and a waste water collection system 40. The air outlet assembly 30 is provided with an air outlet channel 31 with one end communicating with the cooking cavity 11, and the other end of the air outlet channel 31 is provided with an air outlet 32 communicating with the atmosphere; the waste water collection system 40 comprises a collection port 41 arranged below the air outlet 32 and corresponding to the air outlet 32, a collection box 43 detachably arranged on the machine body 10, and a diversion channel 42 arranged in the machine body 10 and communicating the collection port 41 with the collection box 43, the projection of the air outlet 32 on the plane where the edge of the collection port 41 is located is within the collection port 41. When the steam air fryer cooks food, the excess high-temperature steam in the cooking cavity 11 is suitable for being discharged through the air outlet channel 31 of the air outlet assembly 30, and the air outlet channel 31 will form condensed water at the air outlet 32 when discharging high-temperature steam, and the condensed water is suitable for flowing downward under the action of gravity. By arranging the waste water collection system 40 in the steam air fryer, the condensed water generated when high-temperature steam is discharged from the air outlet 32 can be collected and treated, so as to reduce the probability that the condensed water flows out to the external environment and causes pollution to the external environment; meanwhile, by arranging the collection port 41 of the waste water collection system 40 below the air outlet 32 and making the projection of the air outlet 32 on the plane where the edge of the collection port 41 is located be within the collection port 41, the condensed water at the air outlet 32 can better flow into the collection port 41 under the action of gravity, so as to improve the collection effect of the collection port 41 and the waste water collection system 40 and enhance user experience.

As shown in FIG. 1 to FIG. 3, in an optional embodiment, at least part of the outer side of the collection port 41 is provided with a protrusion 44 protruding from the outer shell of the machine body 10, and at least part of the protrusion 44 is an arc-shaped diversion structure extending obliquely from the bottom of the collection port 41 to the outer side of the top of the collection port 41. By arranging the protrusion 44 protruding from the outer shell of the machine body 10 on the outer side of the collection port 41 and setting the protrusion 44 as an arc-shaped diversion structure extending obliquely from the bottom of the collection port 41 to the outer side of the top of the collection port 41, better collection of the condensed water flowing out from the air outlet 32 can be realized, thus effectively improving the collection effect.

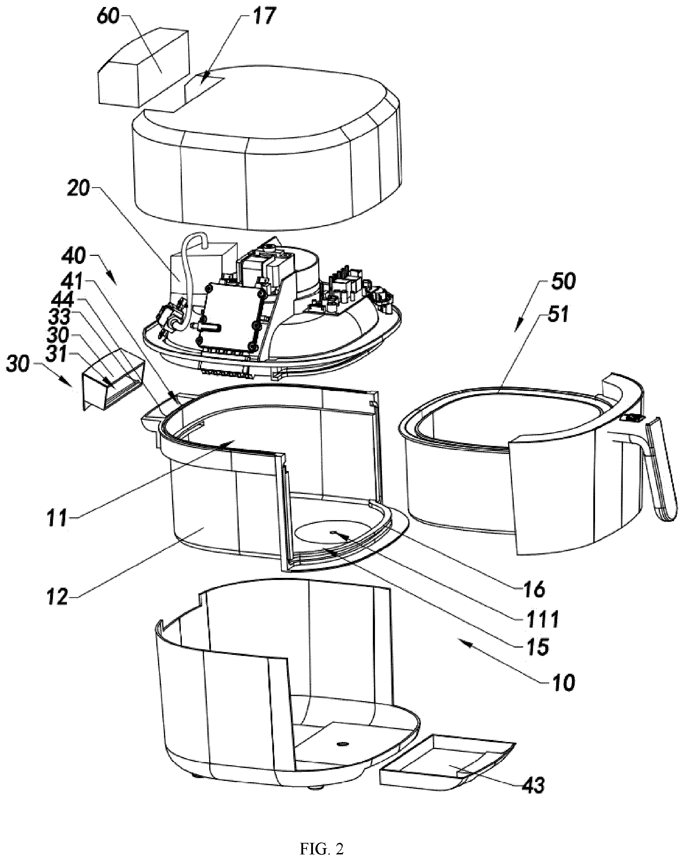

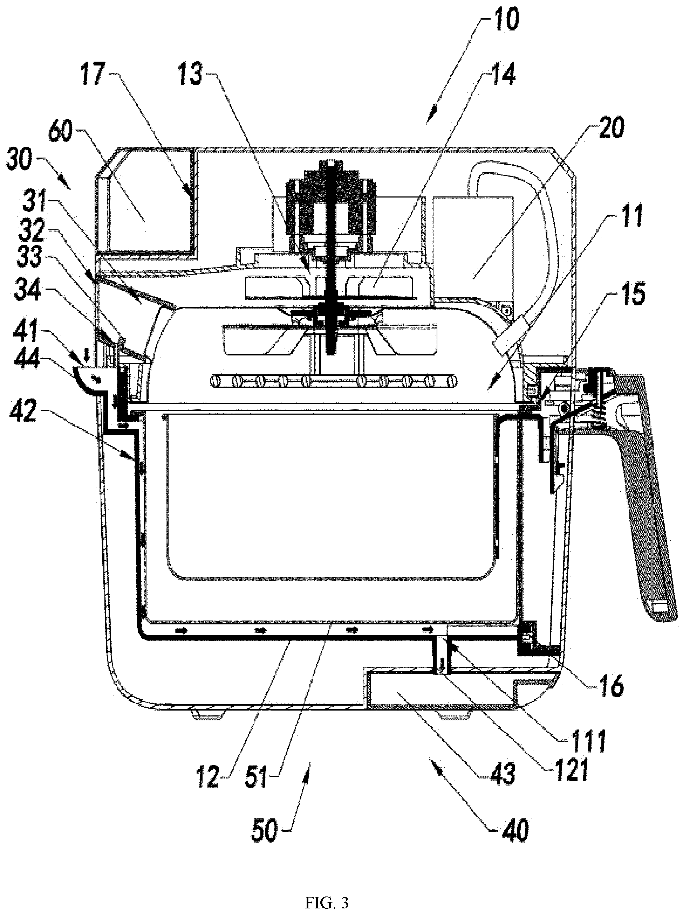

As shown in FIG. 2 and FIG. 3, in an optional embodiment, a lower machine core 12 forming at least part of the cooking cavity 11 is arranged in the machine body 10, and the protrusion 44 is suitable for being integrally formed with the lower machine core 12. By integrally forming the protrusion 44 with the lower machine core 12, not only can the structures of the waste water collection system 40 and the steam air fryer be simplified, thereby reducing installation difficulty and production cost, but also the structural integrity of the steam air fryer can be effectively improved.

As shown in FIG. 1 to FIG. 3, in an optional embodiment, the air outlet 32 and the collection port 41 are suitable for being arranged at the rear part of the machine body 10. Such arrangement can not only hide the air outlet 32 and the collection port 41, thereby improving the overall aesthetic degree of the steam air fryer, but also reduce the risk of users being scalded by the high-temperature steam discharged from the air outlet 32, effectively improving the safety of users.

As shown in FIG. 3, in an optional embodiment, a heat dissipation air duct 13 communicating with the atmosphere is arranged in the machine body 10, a heat dissipation component 14 for generating heat dissipation cold air is arranged in the heat dissipation air duct 13, and at least part of the heat dissipation air duct 13 is arranged around the air outlet assembly 30. By arranging the heat dissipation air duct 13 at least partially surrounding the air outlet assembly 30 in the machine body 10, the heat dissipation cold air in the heat dissipation air duct 13 can be used to dissipate heat for the air outlet assembly 30, thereby reducing the temperature of the air discharged from the air outlet 32 and further reducing the risk of users being scalded by high-temperature steam; meanwhile, using the heat dissipation cold air in the heat dissipation air duct 13 to dissipate heat for the air outlet assembly 30 can also effectively reduce the situation that the high temperature in the air outlet assembly 30 is transferred outward, resulting in excessively high local temperature of the machine body 10.

As shown in FIG. 2 and FIG. 3, in an optional embodiment, the front side of the machine body 10 is provided with a front opening 15 communicating with the cooking cavity 11, a fryer basket assembly 50 is detachably arranged in the cooking cavity 11 through the front opening 15, the fryer basket assembly 50 comprises a fryer basket 51 with a containing cavity, and at least part of the diversion channel 42 is suitable for being formed between the outer wall of the fryer basket 51 and the inner wall of the cooking cavity 11. When the steam air fryer cooks food, a large amount of condensed water will be generated on the inner wall of the cooking cavity 11. By using the outer wall of the fryer basket 51 and the inner wall of the cooking cavity 11 to form at least part of the diversion channel 42, the condensed water in the cooking cavity 11 can be introduced into the collection box 43, so as to avoid affecting the food cooking effect or flowing out to the external environment due to accumulation, thus causing pollution to the external environment.

As shown in FIG. 2 and FIG. 3, in an optional embodiment, the collection box 43 is arranged below the cooking cavity 11, the collection box 43 is preferably arranged at the bottom of the machine body 10, a diversion port 111 communicating with the collection box 43 is arranged at the bottom of the cooking cavity 11, and the bottom wall of the cooking cavity 11 is suitable for being an inclined surface structure inclined from the outer edge to the direction of the diversion port 111. By setting the bottom wall of the cooking cavity 11 as an inclined surface structure inclined from the outer edge to the direction of the diversion port 111, the condensed water in the cooking cavity 11 can automatically gather at the diversion port 111 under the action of gravity and then flow into the collection box 43, which can effectively improve the diversion effect of the diversion channel 42 and the collection effect of the waste water collection system 40; meanwhile, by arranging the collection box 13 at the bottom of the machine body, the collection box 43 can be hidden to improve the overall aesthetic degree of the machine body 10.

As shown in FIG. 3, in an optional embodiment, a water guide pipe 121 extending downward is arranged at the bottom of the lower machine core 12, the upper end of the water guide pipe 121 is communicated with the diversion port 111, and the lower end is communicated with the collection box 43. By arranging the collection box 43 below the lower machine core 12 and setting a water guide pipe 121 extending downward at the bottom of the lower machine core 12 to communicate with the collection box 43, the condensed water in the cooking cavity 11 can automatically flow into the collection box 43 under the action of gravity, effectively improving the diversion effect of the diversion channel 42 and the collection effect of the waste water collection system 40.

As shown in FIG. 2 and FIG. 3, in an optional embodiment, a water retaining part 16 extending upward is arranged at the bottom of the front opening 15, and when the fryer basket assembly 50 is arranged in the cooking cavity 11, the top plane of the water retaining part 16 is suitable for being flush with the bottom plane of the fryer basket 51. The water retaining part is suitable for blocking the water at the bottom of the cooking cavity to prevent the water in the cooking cavity from flowing out of the cooking cavity through the front opening, thus causing pollution to the external environment; meanwhile, the water retaining part 16 is also suitable for blocking the water at the bottom of the fryer basket 51 to reduce the probability that the water at the bottom of the cooking cavity is carried out when the fryer basket is disassembled, thus causing pollution to the external environment.

As shown in FIG. 1 to FIG. 3, in an optional embodiment, a mounting groove 17 with an open top is arranged at the position corresponding to the collection port 41 on the top of the machine body 10, a side opening facing the direction of the collection port 41 is arranged at the side part of the mounting groove 17, a water tank 60 for storing water is detachably arranged in the mounting groove 17, and the water tank 60 is suitable for being communicated with the steam generation system 20. Through the water tank 60 communicated with the steam generation system 20, water can be continuously supplied to the steam generation system 20 to continuously generate high-temperature steam, so as to cook the food in the cooking cavity 11, which can effectively ensure the normal cooking and improve the performance stability of the steam air fryer 20; meanwhile, by arranging the mounting groove 17 on the top of the machine body 10 to install the water tank 60, the water tank 60 can be hidden to improve the overall aesthetic degree of the machine body 10; in addition, by arranging a side opening facing the direction of the collection port 41 at the side part of the mounting groove 17, the residual water generated when the water tank 60 is installed and disassembled can be introduced into the collection port 41, so as to prevent the residual water from being carried out when the water tank 60 is disassembled and polluting the external environment.

As shown in FIG. 3, in an optional embodiment, the air outlet channel 31 is suitable for being arranged obliquely, the upper end of the air outlet channel 31 is suitable for being communicated with the air outlet 32, the lower end is suitable for being communicated with the cooking cavity 11, a water retaining structure 33 is arranged in the air outlet channel 31, the water retaining structure 33 is suitable for extending from the inner wall of the air outlet channel 31 to the middle direction, a water discharge port 34 is arranged on one side of the water retaining structure 33 close to the air outlet 32, and the water discharge port 34 is suitable for being communicated with the diversion channel 42. By obliquely arranging the air outlet channel 31 and setting the water retaining structure 33 and the water discharge port 34 in the air outlet channel 31, not only can the condensed water in the air outlet channel 31 be blocked to prevent the condensed water in the air outlet channel 31 from flowing back into the cooking cavity 11 and polluting the food in the cooking cavity 11, but also the condensed water in the air outlet channel 31 can be discharged to avoid the condensed water accumulating in the air outlet channel 31 and affecting the normal air outlet of the air outlet channel 31.

The above content is a further detailed description of the application in combination with specific preferred embodiments, and the purpose of the application has been completely and effectively achieved. Those skilled in the art should understand that the embodiments of the application shown in the above description and drawings are only examples and do not limit the application. For those of ordinary skill in the technical field to which the application belongs, several simple deductions or substitutions can be made without departing from the application, which should be regarded as belonging to the patent protection scope determined by the claims submitted by the application.

### Industrial Applicability

In the present application, By arranging the waste water collection system in the steam air fryer, the condensed water generated when high-temperature steam is discharged from the air outlet can be collected and treated, so as to reduce the probability that the condensed water flows out to the external environment and causes pollution to the external environment; meanwhile, by arranging the collection port of the waste water collection system below the air outlet and making the projection of the air outlet on the plane where the edge of the collection port is located be within the collection port, the condensed water at the air outlet can better flow into the collection port under the action of gravity, so as to improve the collection effect of the collection port and the waste water collection system and enhance user experience.

## Claims

1. A steam air fryer with waste water collection function, comprising a machine body (10), a cooking cavity (11) arranged in the machine body (10), a steam generation system (20) for delivering steam into the cooking cavity (11), and an air outlet assembly(30) for discharging steam in the cooking cavity (11), wherein the air outlet assembly (30) comprises an air outlet channel (31) with one end communicating with the cooking cavity (11), and the other end of the air outlet channel (31) is provided with an air outlet (32) communicating with the atmosphere, **characterized in that** the steam air fryer further comprises a waste water collection system (40), the waste water collection system (40) comprises a collection port (41) arranged below the air outlet (32) and corresponding to the air outlet (32), a collection box (43) detachably arranged on the machine body (10), and a diversion channel (42) arranged in the machine body (10) and communicating the collection port (41) with the collection box (43), and the projection of the air outlet (32) on the plane where the edge of the collection port (41) is located is within the collection port (41).

2. The steam air fryer with waste water collection function according to claim 1, **characterized in that** at least part of the outer side of the collection port (41) is provided with a protrusion (44) protruding from the outer shell of the machine body (10), and at least part of the protrusion (44) is an arc-shaped diversion structure extending obliquely from the bottom of the collection port (41) to the outer side of the top of the collection port (41).

3. The steam air fryer with waste water collection function according to claim 2, **characterized in that** a lower machine core (12) forming at least part of the cooking cavity (11) is arranged in the machine body (10), and the protrusion (44) is suitable for being integrally formed with the lower machine core (12).

4. The steam air fryer with waste water collection function according to claim 1, **characterized in that** a heat dissipation air duct (13) communicating with the atmosphere is arranged in the machine body (10), a heat dissipation component (14) for generating heat dissipation cold air is arranged in the heat dissipation air duct (13), and at least part of the heat dissipation air duct (13) is arranged around the air outlet assembly (30).

5. The steam air fryer with waste water collection function according to claim 1, **characterized in that** the front side of the machine body (10) is provided with a front opening (15) communicating with the cooking cavity (11), a fryer basket assembly (50) is detachably arranged in the cooking cavity (11) through the front opening (15), the fryer basket assembly (50) comprises a fryer basket (51) with a containing cavity, and at least part of the diversion channel (42) is suitable for being formed between the outer wall of the fryer basket (51) and the inner wall of the cooking cavity (11).

6. The steam air fryer with waste water collection function according to claim 5, **characterized in that** the collection box (43) is arranged below the cooking cavity (11), a diversion port (111) communicating with the collection box (43) is arranged at the bottom of the cooking cavity (11), and the bottom wall of the cooking cavity (11) is suitable for being an inclined surface structure inclined from the outer edge to the direction of the diversion port (111).

7. The steam air fryer with waste water collection function according to claim 6, **characterized in that** a lower machine core (12) forming at least part of the cooking cavity (11) is arranged at the bottom of the cooking cavity (11), a water guide pipe (121) extending downward is arranged at the bottom of the lower machine core (12), the upper end of the water guide pipe (121) is communicated with the diversion port (111), and the lower end is communicated with the collection box (43).

8. The steam air fryer with waste water collection function according to claim 5, **characterized in that** a water retaining part (16) extending upward is arranged at the bottom of the front opening (15), and when the fryer basket (51) assembly is arranged in the cooking cavity (11), the top plane of the water retaining part (16) is suitable for being flush with the bottom plane of the fryer basket (51).

9. The steam air fryer with waste water collection function according to claim 1, **characterized in that** a mounting groove (17) with an open top is arranged at the position corresponding to the collection port (41) on the top of the machine body (10), a side opening facing the direction of the collection port (41) is arranged at the side part of the mounting groove (17), a water tank (60) is detachably arranged in the mounting groove (17), and the water tank (60) is suitable for being communicated with the steam generation system (20).

10. The steam air fryer with waste water collection function according to any one of claims 1-9, **characterized in that** the air outlet channel (31) is suitable for being arranged obliquely, the upper end of the air outlet channel (31) is communicated with the air outlet (32), the lower end is communicated with the cooking cavity (11), a water retaining structure (33) is arranged in the air outlet channel (31), a water discharge port (34) is arranged on one side of the water retaining structure (33) close to the air outlet (32), and the water discharge port (34) is communicated with the diversion channel (42).
